(19) Europäisches Patentamt
European Patent Office
Office européen des brevets

(11) Veröffentlichungsnummer: **0 026 815**
**B1**

(12) # EUROPÄISCHE PATENTSCHRIFT

(45) Veröffentlichungstag der Patentschrift: **26.05.82**

(51) Int. Cl.³: **C 07 F 9/34**

(21) Anmeldenummer: **80104159.1**

(22) Anmeldetag: **16.07.80**

(54) **Verfahren zur Herstellung von 2-Chlorformylethyl-methyl-phosphinsäurechloriden.**

(30) Priorität: **11.09.79 DE 2936609**

(43) Veröffentlichungstag der Anmeldung: **15.04.81 Patentblatt 81/15**

(45) Bekanntmachung des Hinweises auf die Patenterteilung: **26.05.82 Patentblatt 82/21**

(84) Benannte Vertragsstaaten: **AT BE CH DE FR GB IT LI NL**

(56) Entgegenhaltungen:
**DE-C-2 529 731**

**Chemical Abstracts, Band 67, 1967
Columbus, Ohio, USA
V.K. KHAIRULLIN et al.
"Reaction of methyldichlorophosphine with acrylic acid"
Seite 5107**

(73) Patentinhaber: **HOECHST AKTIENGESELLSCHAFT, Postfach 80 03 20, D-6230 Frankfurt/Main 80 (DE)**

(72) Erfinder: **Ohorodnik, Alexander, Dr., Kastanienweg 24, D-5042 Erftstadt, (DE)**
Erfinder: **Neumaier, Hubert, Dr., Breslauer Strasse 76, D-5040 Brühl (DE)**
Erfinder: **Gehrmann, Klaus, Dr., Geschwister-Scholl-Strasse 32, D-5042 Erftstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Verfahren zur Herstellung von 2-Chlorformylethyl-methyl-phosphinsäurechloriden

Es ist bekannt, dass man 2-Chlorformylethyl-methyl-phosphinsäurechlorid durch Umsetzung von Methyldichlorphosphan mit Acrylsäure gewinnen kann. So beschrieben Khairullin und Mitarbeiter [Z. Obsc. Chim. 37, 710–714 (1967)] die Herstellung unterhalb 36°C mit nachfolgender Destillation und einer Ausbeute von 72% d.Th.

Bei der Umsetzung werden je Mol 2-Chloroformylethyl-methyl-phosphinsäurechlorid 138,5 kJ Wärme frei. Dieser Umstand erfordert, um die Zersetzung der thermisch instabilen Reaktionsprodukte zu vermeiden, lange Reaktionszeiten bei niederen Temperaturen. Es gelingt aber nicht, die Bildung von Nebenprodukten so weit zu verhindern, dass sich eine anschliessende destillative Reinigung der Reaktionsprodukte erübrigt hätte. Ausserdem liessen die Material- und Raumzeitausbeuten stark zu wünschen übrig.

In der DE-PS 25 29 731 ist ein Verfahren beschrieben, welches diese Schwierigkeiten umgeht, indem in einer kontinuierlichen Arbeitsweise beispielsweise Methyldichlorphosphan mit Acrylsäure bei 50 bis 120°C umgesetzt wird, wobei die Reaktionswärme bequem abgeführt werden kann und 2-Chlorformyl-ethyl-methyl-phosphinsäurechlorid mit sehr guten Ausbeuten und hoher Reinheit gewonnen wird.

Der Nachteil des genannten Verfahrens ist jedoch, dass als Ausgangsmaterial reines Methyldichlorphosphan benötigt wird. Methyldichlorphosphan wird z.B. gemäss BE-PS 856 773 durch Umsetzung von Phosphortrichlorid mit Methan oberhalb 500°C gewonnen, wobei ein Rohprodukt anfällt, welches 15–20 Gew.% Methyldichlorphosphan enthält. Der Rest ist vorwiegend Phosphortrichlorid. Die Reingewinnung von Methyldichlorphosphan aus dem Methyldichlorphosphan/Phosphortrichlorid-Gemisch, wie sie in der BE-PS 857 203 beschrieben ist, erfordert einen erheblichen Aufwand an Apparatur und Kosten.

Überraschenderweise wurde nun gefunden, dass man 2-Chlorformylethylmethyl-phosphinsäurechloride der allgemeinen Formel

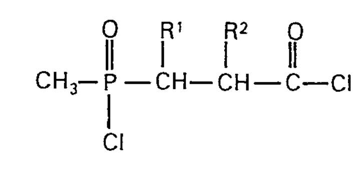

durch Umsetzung von Methyldichlorphosphan mit einer α,β-ungesättigten Säure der allgemeinen Formel

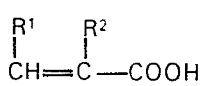

wobei $R^1$ und $R^2$ = H oder $CH_3$ sind, auch in Gegenwart grosser Mengen Phosphortrichlorid selektiv und mit sehr guten Material- und Raumzeitausbeuten herstellen kann, wenn man die Umsetzung bei Temperaturen zwischen 50 und 90°C in Gegenwart von Chlorwasserstoff durchführt.

Dies war völlig unerwartet, da dem Fachmann bekannt ist, dass Phosphortrichlorid mit beispielsweise Acrylsäure bei etwa 60°C Acrylsäurechlorid liefert, welches mit Chlorwasserstoff zu β-Chlorpropionsäurechlorid umgewandelt werden kann (Rehberg, Dixon und Fisher, Journ. Amer. Chem. Soc. 67, 209 [1945]).

Das erfindungsgemässe Verfahren kann diskontinuierlich oder kontinuierlich durchgeführt werden. Die Reaktion verläuft sehr schnell und ist in üblichen Anlagen – in Abhängigkeit von deren Dimension und von der Reaktionstemperatur – in etwa 0,2–3 Stunden beendet. Es ist von Vorteil, die Umsetzung kontinuierlich durchzuführen, da so die Reaktionswärme ohne Schwierigkeit abgeführt werden kann und die schnelle Reaktion im Zusammenhang mit hohem Umsatz gute Raumzeitausbeuten zulässt.

Zur diskontinuierlichen Durchführung des erfindungsgemässen Verfahrens wird eine Lösung von methyldichlorphosphan in Phosphortrichlorid in einem Reaktionsgefäss, in welchem eine Chlorwasserstoffatmosphäre – hervorgerufen durch Durchleiten von Chlorwasserstoffgas – erzeugt wird, auf die gewünschte Temperatur erhitzt, woraufhin unter Beibehaltung der Temperatur die α,β-ungesättigte Carbonsäure eindosiert wird. Die Menge des Chlorwasserstoffs ist hierbei nicht kritisch.

Bei kontinuierlicher Reaktionsführung werden in einem beheizbaren Umlaufreaktor die Methyldichlorphosphan/Phosphortrichlorid-Lösung und die α,β-ungesättigte Carbonsäure im erforderlichen Mengenverhältnis bei der gewünschten Temperatur eindosiert, während durch das Reaktionsgemisch ein Chlorwasserstoffstrom geleitet wird. Die Menge des Chlorwasserstoffs ist hierbei nicht kritisch. Das Reaktionsprodukt wird aus dem Reaktor in dem Masse abgezogen wie die Ausgangskomponenten eindosiert werden.

Die erfindungsgemässe Reaktion wird bevorzugt bei 70–76°C durchgeführt. Von besonderem Vorteil ist es, am Siedepunkt des Reaktionsgemisches zu arbeiten, da sich so ein Teil der Reaktionswärme in einfacher Weise durch Siedekühlung abführen lässt.

Das Molverhältnis der Reaktionspartner Methyldichlorphosphan zu α,β-ungesättigter Carbonsäure kann 1:0,8 bis 1,2 betragen. Ein Überschuss an α,β-ungesättigter Carbonsäure beeinträchtigt nicht die Ausbeute, bezogen auf Methyldichlorphosphan. Die überschüssige ungesättigte Carbonsäure wird aber auch durch Reaktion mit dem im hohen Überschuss vorhandenen Phosphortrichlorid verbraucht und vermindert so die Ausbeute, bezogen auf die eingesetzte Carbonsäure, unter Bildung unerwünschter Nebenprodukte. Es ist deshalb von Vorteil, einen geringen Unterschuss an α,β-ungesättigter Carbonsäure, bezogen auf die stöchiometrische Menge,

einzusetzen. Das so in geringer Menge nichtumgesetzte Methyldichlorphosphan fällt bei der anschliessenden Destillation der Leichtsieder zusammen mit Phosphortrichlorid an und kann in Form dieses Destillats in die Anlage zur Herstellung von Methyldichlorphosphan aus Phosphortrichlorid und Methan zurückgeführt werden.

Nach dem erfindungsgemässen Verfahren können aus dem Reaktionsprodukt die Leichtsieder, vorwiegend Phosphortrichlorid und gegebenenfalls geringe Mengen nichtumgesetztes Methyldichlorphosphan, durch eine einfache Destillation abgetrennt werden, bis im Rückstand eine Temperatur von 120–140°C erreicht ist. Die Destillation kann bei Atmosphärendruck oder im Vakuum sowohl chargenweise, beispielsweise aus einer Destillationsblase mit Destillationsbrücke und absteigendem Kühler, als auch kontinuierlich, beispielsweise in einem Umlaufverdampfer mit Spritzschutz und absteigendem Kühler, erfolgen. Von Vorteil ist eine kontinuierliche Destillationsführung unter Atmosphärendruck, wobei zweckmässig durch ein Stripgas ein Zwangsumlauf des hochsiedenden Rückstandes im Umlaufverdampfer erzeugt wird.

Der Rückstand, 2-Chlorformylethyl-methylphosphinsäurechlorid, kann ohne weitere Reinigung in bekannter Weise, z.B. gemäss DE-PS 25 31 238, mit Acetanhydrid zu 2-Methyl-2,5-dioxo-1-oxa-2-phospholan umgesetzt werden. Verbindungen dieses Typs lassen sich mit Vorteil in Polyestermaterial einkondensieren und verleihen den daraus gewonnenen Fäden, Fasern, Folien und Formkörpern ausgezeichnete flammwidrige oder selbstverlöschende Eigenschaften. Um eine Beeinträchtigung verschiedener Qualitätsmerkmale der so ausgerüsteten flammfesten Materialien, z.B. ihrer Farbe oder Spinnfähigkeit zu vermeiden, müssen die einzusetzenden 2-Chlorformylethyl-methylphosphinsäurechloride in hoher Reinheit vorliegen.

Im einzelnen betrifft die Erfindung nunmehr ein Verfahren zur Herstellung von 2-Chlorformylethyl-methyl-phosphinsäurechloriden der allgemeinen Formel

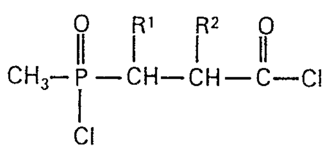

worin $R^1$ und $R^2$ = H oder $CH_3$ bedeuten, durch Umsetzung von Methyldichlorphosphan mit einer ungesättigten Carbonsäure der Formel $CHR^1 = CR^2 - COOH$, wie Acrylsäure, Methacrylsäure oder Crotonsäure, bei erhöhter Temperatur, welches dadurch gekennzeichnet ist, dass man eine Lösung von Methyldichlorphosphan in Phosphortrichlorid, wie sie bei der Reaktion von Phosphortrichlorid mit Methan oberhalb 500°C anfällt, einsetzt, die Umsetzung bei Temperaturen von 50 bis 90°C in Gegenwart von Chlorwasserstoff durchführt und das Phosphortrichlorid abdestilliert.

Das Verfahren der Erfindung kann ferner wahlweise und bevorzugt dadurch gekennzeichnet sein, dass man

a) Lösungen von Methyldichlorphosphan in Phsophortrichlorid mit einem Gehalt von 5 bis 95 Gew%, vorzugsweise 10–25 Gew%, Methyldichlorphosphan einsetzt;

b) 0,01 bis 1 Mol, vorzugsweise 0,05 bis 0,5 Mol, Chlorwasserstoff je Mol Methyldichlorphosphan und Stunde durch das Reaktionsgemisch leitet;

c) die Umsetzung bei Temperaturen von 70 bis 76°C durchführt;

d) mit einem Molverhältnis von Methyldichlorphosphan zu $\alpha,\beta$-ungesättigter Carbonsäure von 1 zu 0,8 bis 1,2, vorzugsweise 1 zu 0,95 bis 1,05, arbeitet;

e) nach der Umsetzung das Phosphortrichlorid aus dem Reaktionsgemisch abdestilliert, bis im Rückstand eine Temperatur von 120–140°C erreicht ist.

Die nachfolgenden Beispiele dienen der näheren Erläuterung des erfindungsgemässen Verfahrens.

Beispiel 1 (Vergleichsbeispiel)

In einem Vierhalskolben mit Rührer, Thermometer, Rückflusskühler und Einlaufgefäss wurde eine Lösung von 117 g (1 Mol) Methyldichlorphosphan in 663 g Phosphortrichlorid vorgelegt und auf 30°C erwärmt. Bei dieser Temperatur wurden innerhalb von 8 Minuten 86,4 g (1,2 Mol) Acrylsäure unter Rühren eingetropft. Anschliessend wurde 3 Stunden bei 30°C gerührt. Nach 5, 60 und 180 Minuten wurde je eine Probe entnommen und mittels H-NMR-Spektroskopie untersucht. Die Ergebnisse sind aus der nachfolgenden Tabelle ersichtlich:

Tabelle

| | 5 min | | 60 min | | 180 min | |
|---|---|---|---|---|---|---|
| | g | Mol | g | Mol | g | Mol |
| $CH_3PCl_2$ | 117 | 1 | 65 | 0,56 | 17,5 | 0,15 |
| $CH_2{=}CHCOOH$ | 86,4 | 1,2 | 30 | 0,4 | — | — |
| $ClCH_2CH_2COOH$ | — | — | 31 | 0,25 | 44,5 | 0,35 |

Tabelle (Fortsetzung)

| | 5 min | | 60 min | | 180 min | |
|---|---|---|---|---|---|---|
| | g | Mol | g | Mol | g | Mol |
| $CH_3P(O)(Cl)CH_2CH_2COCl$ | — | — | 80,5 | 0,43 | 151 | 0,8 |
| $CH_2{=}CHCOCl$ | — | — | 12,5 | 0,14 | — | — |
| Umsatz $CH_3PCl_2$ | 0 % | | 44 % | | 85 % | |
| Umsatz $CH_2{=}CHCOOH$ | 0 % | | 66,6 % | | 100 % | |

Anschliessend wurden im Wasserstrahlvakuum die Leichtsieder - Phosphortrichlorid (Hauptmenge), Methyldichlorphosphan und β-Chlorpropionsäurechlorid - abgezogen, bis im Rückstand eine Temperatur von 120°C erreicht war. Nach Abkühlung wurden 159 g einer viskosen Masse erhalten, die nach dem Ergebnis der $^1$H-NMR-Spektroskopie zu 95 Gew.% aus 2-Chlorformylethyl-methyl-phosphinsäurechlorid bestand. Die Ausbeute betrug 79,9%, bezogen auf eingesetztes $CH_3PCl_2$, bzw. 94%, bezogen auf umgesetztes $CH_3PCl_2$, und 66,6%, bezogen auf eingesetzte Acrylsäure.

Zum Rückstand wurden bei 80°C 102 g (1 Mol) Essigsäureanhydrid zugesetzt, wobei sich 2-Chlorformylethyl-methyl-phosphinsäurechlorid in 2-Methyl-2,5-dioxo-1-oxa-2-phospholan umwandelte. Das gebildete Acetylchlorid wurde abdestilliert, der Rückstand 3 Stunden bei 120-130°C mit Stickstoff durchgast und anschliessend im Vakuum destilliert. Bei 165 bis 180°C und 0,8 mbar wurden 100 g 2-Methyl-2,5-dioxo-1-oxa-2-phospholan vom Schmelzpunkt 102-103°C erhalten. Die Ausbeute betrug 76,6%, bezogen auf eingesetztes, und 88%, bezogen auf umgesetztes Methyldichlorphosphan, bzw. 62%, bezogen auf eingesetzte Acrylsäure.

Beispiel 2 (Vergleichsbeispiel)

In einem Vierhalskolben mit Rührer, Thermometer, Rückflusskühler und Einlaufgefäss wurde eine Lösung von 117 g (1 Mol) Methyldichlorphosphan in 663 g Phosphortrichlorid auf 70°C erwärmt. Unter Rühren wurden innerhalb von 15 Minuten 86,4 g (1,2 Mol) Acrylsäure eingetropft. Das Molverhältnis Acrylsäure zu Methyldichlorphosphan betrug 1,2:1. Während zu Beginn des Eintropfens die Temperatur auf 63°C absank, trat bald eine heftige Reaktion unter Aufschäumen und schwarzbrauner Verfärbung des Reaktionsproduktes ein, so dass zur Aufrechterhaltung der Temperatur von 70°C gekühlt werden musste. 5 Minuten nach Beendigung des Acrylsäureeinlaufs war das eingesetzte Methyldichlorphosphan, wie eine Probe im H-NMR-Spektrum zeigte, weitgehend abreagiert. Es wurde noch 30 Minuten bei 70°C gerührt. Anschliessend wurden im Wasserstrahlvakuum die Leichtsieder abdestilliert, bis im Rückstand eine Temperatur von 120°C erreicht war. Nach Abkühlung wurden 141 g einer schwarzbraunen, viskosen Masse erhalten, die nach dem Ergebnis der $^1$H-NMR-Spektroskopie 79 Gew.% 2-Chlorformylethyl-methyl-phosphinsäurechlorid enthielt. Die Ausbeute betrug 58,9%, bezogen auf eingesetztes $CH_3PCl_2$, bzw. 49%, bezogen auf eingesetzte Acrylsäure.

Der Rückstand wurde wie in Beispiel 1 beschrieben zu 2-Methyl-2,5-dioxo-1-oxa-2-phospholan umgesetzt. Es wurden 77 g erhalten. Die Ausbeute betrug 57,5%, bezogen auf eingesetztes Methyldichlorphosphan, bzw. 47,9%, bezogen auf eingesetzte Acrylsäure.

Beispiel 3

Es wurde analog Beispiel 2 bei 70°C gearbeitet, wobei jedoch während der Dauer des Acrylsäureeinlaufs und der Nachreaktion von zusammen 45 Minuten ein konstanter Chlorwasserstoffstrom von 10 l/h (= 0,4 Mol HCl je Mol $CH_3PCl_2$ und Stunde) durch das Reaktionsgemisch geleitet wurde. Die Reaktionslösung blieb hierbei farblos. Nach Aufarbeitung analog Beispiel 1 wurden 185,4 g eines nahezu farblosen Kristallisats mit einem Schmelzpunkt von 59°C erhalten, das nach dem Ergebnis der $^1$H-NMR-Spektroskopie zu 99 Gew.% aus 2-Chlorformylethyl-methyl-phosphinsäurechlorid bestand. Die Ausbeute betrug 97,1%, bezogen auf eingesetztes $CH_3PCl_2$, bzw. 80,9%, bezogen auf eingesetzte Acrylsäure.

Die weitere Umsetzung analog Beispiel 1 ergab 128,5 g 2-Methyl-2,5-dioxo-1-oxa-2-phospholan mit einem Schmelzpunkt von 103°C. Die Ausbeute betrug 95,9%, bezogen auf eingesetztes Methyldichlorphosphan, bzw. 79,9%, bezogen auf eingesetzte Acrylsäure.

Beispiel 4

Es wurde analog Beispiel 3 gearbeitet, wobei jedoch 79,2 g (1,1 Mol) Acrylsäure eingesetzt wurden. Das Molverhältnis Acrylsäure zu Methyldichlorphosphan betrug 1,1:1. Das Leichtsiederdestillat des Reaktionsproduktes betrug 648,5 g und wurde gaschromatographisch untersucht. Es enthielt 99,1 Gew.% $PCl_3$, 0,6 Gew.% $CH_3PCl_2$ und 0,4 Gew.% $ClCH_2CH_2COCl$.

Der $CH_3PCl_2$-Umsatz betrug demnach 96,7%. Der nahezu farblose, feste Rückstand (184,5 g) hatte einen Schmelzpunkt von 59°C und enthielt nach dem Ergebnis der $^1$H-NMR-Spektroskopie 99 Gew.% 2-Chlorformylethyl-methyl-phosphinsäurechlorid. Die Ausbeute betrug 96,6%, bezogen auf eingesetztes $CH_3PCl_2$, und 99,9%, bezogen auf umgesetztes $CH_3PCl_2$, bzw. 87,9% berechnet auf eingesetzte Acrylsäure.

Die weitere Umsetzung analog Beispiel 1 ergab 128,5 g 2-Methyl-2,5-dioxo-1-oxa-2-phospholan.

Die Ausbeute betrug 95,9%, berechnet auf eingesetztes $CH_3PCl_2$, und 99,1%, berechnet auf umgesetztes Methyldichlorphosphan, bzw. 87,2%, berechnet auf eingesetzte Acrylsäure.

Beispiel 5

In der wie in Beispiel 1 beschriebenen Apparatur wurde eine Lösung von 117 g (1 Mol) Methyldichlorphosphan in 663 g Phosphortrichlorid unter gleichzeitigem Durchleiten von 5 l/h Chlorwasserstoff (= 0,2 Mol HCl je Mol $CH_3PCl_2$ und Stunde) zum Sieden erhitzt, wobei sich eine Rückflusstemperatur von 74°C einstellte. In die siedende Lösung wurden innerhalb von 30 Minuten 75,6 g (1,05 Mol) Acrylsäure (Molverhältnis Acrylsäure: Methyldichlorphosphan 1,05:1) eindosiert, wobei anfangs die Rückflusstemperatur auf 67°C absank und gegen Ende auf 76°C stieg. Bei dieser Temperatur wurde das Reaktionsgemisch noch 30 Minuten unter weiterem Durchleiten von Chlorwasserstoff gerührt.

Bei der anschliessenden Destillation der Leichtsieder, analog Beispiel 1, wurden 654,5 g Destillat erhalten. Es enthielt 99,5 Gew.% $PCl_3$, 0,3 Gew.% $CH_3PCl_2$ und <0,1 Gew.% β-Chlorpropionsäurechlorid. Der $CH_3PCl_2$-Umsatz betrug demnach 98,3%. Als Rückstand wurden 183 g eines nahezu farblosen Kristallisats mit einem Schmelzpunkt von 59–60°C erhalten, welches nach dem Ergebnis der $^1$H-NMR-Spektroskopie zu 99 Gew.% aus 2-Chlorformylethyl-methylphosphinsäurechlorid bestand.

Die Ausbeute betrug 95,8%, bezogen auf eingesetztes $CH_3PCl_2$, bzw. 97,5%, bezogen auf umgesetztes $CH_3PCl_2$, bzw. 91,3%, berechnet auf eingesetzte Acrylsäure.

Die weitere Umsetzung analog Beispiel 1 ergab 127,5 g 2-Methyl-2,5-dioxo-1-oxa-2-phospholan mit einem Schmelzpunkt von 103°C. Die Ausbeute betrug 96,8%, berechnet auf umgesetztes Methyldichlorphosphan, bzw. 90,6%, berechnet auf eingesetzte Acrylsäure.

Beispiel 6

Dieser Versuch wurde kontinuierlich durchgeführt. Als Ausgangslösung wurde ein Rohprodukt verwendet, wie es bei der Herstellung von Methyldichlorphosphan aus Phosphortrichlorid und Methan nach der DE-PS 27 18 391 anfällt und auch zur Reingewinnung von Methyldichlorphosphan nach der DE-AS 27 24 407 verwendet wird. Das Rohprodukt hatte folgende Zusammensetzung in Gew.-%:

| | | |
|---|---|---|
| $CH_3PCl_2$ | : | 15,4% |
| $PCl_3$ | : | 79,7% |
| $CCl_4$ | : | 2,8% |
| $HCCl_3$ | : | 1,5% |
| $POCl_3$ | : | 0,3% |
| Unbekannte | : | 0,3% |

Ein Umlaufreaktor mit einem Reaktionsvolumen von 1,1 l, bestehend aus zwei senkrecht stehenden, ummantelten Rohren, die oben und unten verbunden waren, wurde mit Reaktionsprodukt aus einem früheren Ansatz gefüllt und auf 74°C aufgeheizt, so dass an einem am Kopf des einen Schenkels angebrachten Rückflusskühler ein schwacher Rückfluss entstand. Gleichzeitig wurden in diesen Schenkel von unten 10 l/h Chlorwasserstoffgas (= 0,13 Mol HCl je Mol $CH_3PCl_2$ und Stunde) eingeleitet, wodurch im Reaktor ein Zwangsumlauf entstand. Der Chlorwasserstoff wurde über den Rückflusskühler abgeleitet.

Nun wurden kontinuierlich 206 g/h Acrylsäure und 2300 g/h des oben genannten Rohproduktes mit einem Gehalt von 15,4 Gew.% Methyldichlorphosphan von unten eindosiert. Das entsprach 2,86 Mol/h Acrylsäure und 354 g/h oder 3,02 Mol/h Methyldichlorphosphan. Das Molverhältnis Acrylsäure zu Methyldichlorphosphan betrug 0,95:1.

Über einen Überlauf wurden kontinuierlich 2505 g/h Reaktionsprodukt entnommen. Nach 20 Stunden Betriebszeit wurden insgesamt 50,1 kg erhalten. In einer kontinuierlichen Destillationsapparatur wurden daraus bei Atmosphärendruck die Leichtsieder abgetrieben und aus dem Umlaufverdampfer, in dem mittels eines Chlorwasserstoffstromes von 5 l/h ein Zwangsumlauf erzeugt wurde, wurde das 2-Chlorformylethyl-methyl-phosphinsäurechlorid bei einer Sumpftemperatur von 130–140°C kontinuierlich abgezogen und gesammelt. Insgesamt wurden 39,05 kg Leichtsieder folgender Zusammensetzung erhalten:

| | | |
|---|---|---|
| $CH_3PCl_2$ | : | 1,36% |
| $PCl_3$ | : | 92,94% |
| $CCl_4$ | : | 3,3% |
| $HCCl_3$ | : | 1,74% |
| $POCl_3$ | : | 0,35% |
| Unbekannte | : | 0,35% |

Das Destillat wurde in die Anlage zur Herstellung von Methyldichlorphosphan aus $PCl_3$ und $CH_4$ zurückgeführt. Als Destillationsrückstand verblieben 10,52 kg 2-Chlorformylethyl-methylphosphinsäurechlorid mit einem Schmelzpunkt von 59–60°C. Nach dem Ergebnis der $^1$H-NMR-Spektroskopie war das Produkt 99%ig. Die Ausbeute betrug 91%, berechnet auf eingesetztes $CH_3PCl_2$, bzw. 98,4%, berechnet auf umgesetztes $CH_3PCl_2$, sowie 96,3%, berechnet auf eingesetzte Acrylsäure.

Die Raumzeitausbeute für 2-Chlorformylethyl-methyl-phosphinsäurechlorid im Reaktor betrug etwa 500 $g \cdot Liter^{-1} \cdot h^{-1}$.

Der Rückstand wurde weiterhin bei 70–80°C mit 6250 g Essigsäureanhydrid versetzt, das gebildete Acetylchlorid abdestilliert und der Rückstand zunächst 3 Stunden bei 140–150°C und 70–140 mbar mit Stickstoff durchgast und anschliessend im Vakuum destilliert.

Bei 165–180°C und 0,8 mbar wurden 7240 g 2-Methyl-2,5-dioxo-1-oxa-2-phospholan mit einem Schmelzpunkt von 103°C erhalten.

Die Ausbeute betrug 96,5%, berechnet auf umgesetztes Methyldichlorphosphan, und 94,7%, berechnet auf eingesetzte Acrylsäure.

**Patentansprüche**

1. Verfahren zur Herstellung von 2-Chlorformylethyl-methyl-phosphinsäurechloriden der allgemeinen Formel

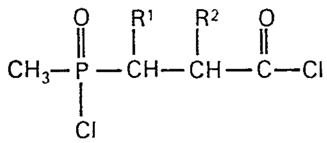

worin $R^1$ und $R^2$ = H oder $CH_3$ bedeuten, durch Umsetzung von Methyldichlorphosphan mit einer ungesättigten Carbonsäure der Formel $CHR^1 = CR^2\text{-}COOH$ bei erhöhter Temperatur, dadurch gekennzeichnet, dass man eine Lösung von Methyldichlorphosphan in Phosphortrichlorid, wie sie bei der Reaktion von Phosphortrichlorid mit Methan oberhalb 500°C anfällt, einsetzt, die Umsetzung bei Temperaturen von 50 bis 90°C in Gegenwart von Chlorwasserstoff durchführt und das Phosphortrichlorid abdestilliert.

2. Verfahren nach Anspruch 1, dadurch gekennzeichnet, dass man Lösungen von Methyldichlorphosphan in Phosphortrichlorid mit einem Gehalt von 5 bis 95 Gew.%, vorzugsweise 10-25 Gew.%, Methyldichlorphosphan einsetzt.

3. Verfahren nach Anspruch 1 oder 2, dadurch gekennzeichnet, dass man 0,01 bis 1 Mol, vorzugsweise 0,05 bis 0,5 Mol, Chlorwasserstoff je Mol Methyldichlorphosphan und Stunde durch das Reaktionsgemisch leitet.

4. Verfahren nach einem der Ansprüche 1 bis 3, dadurch gekennzeichnet, dass man die Umsetzung bei Temperaturen von 70 bis 76°C durchführt.

5. Verfahren nach einem der Ansprüche 1 bis 4, dadurch gekennzeichnet, dass man mit einem Molverhältnis von Methyldichlorphosphan zu $\alpha,\beta$-ungesättigter Carbonsäure von 1 zu 0,8 bis 1,2, vorzugsweise 1 zu 0,95 bis 1,05, arbeitet.

6. Verfahren nach einem der Ansprüche 1 bis 5, dadurch gekennzeichnet, das man nach der Umsetzung das Phosphortrichlorid aus dem Reaktionsgemisch abdestilliert, bis im Rückstand eine Temperatur von 120-140°C erreicht ist.

**Revendications**

1. Procédé pour la préparation de chlorures d'acides 2-chloroformyléthyl-méthyl-phosphiniques de formule générale

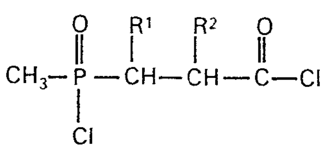

où $R^1$ et $R^2$ = H ou $CH_3$ par réaction à température élevée de méthyl-dichlorophosphine avec un acide carboxylique insaturé de formule $CHR^1 = CR^2COOH$, caractérisé en ce que l'on utilise une solution de méthyldichlorophosphine dans le trichlorure de phosphore telle qu'elle se forme dans la réaction du trichlorure de phosphore avec le méthane au-dessus de 500°C, on effectue la réaction à des températures de 50 à 90°C en présence de chlorure d'hydrogène et on chasse par distillation le trichlorure de phosphore.

2. Procédé selon la revendication 1, caractérisé en ce que l'on utilise des solutions de méthyldichlorophosphine dans le trichlorure de phosphore ayant une teneur en méthyldichlorophosphine de 5 à 95% en poids, de préférence de 10 à 25% en poids.

3. Procédé selon la revendication 1 ou 2, caractérisé en ce que l'on envoie à travers le mélange de réaction 0,01 à 1 mole, de préférence 0,05 à 0,5 mole de chlorure d'hydrogène par mole de méthyldichlorphosphine et par heure.

4. Procédé selon l'une des revendications 1 à 3, caractérisé en ce que l'on effectue la réaction à des températures de 70 à 76°C.

5. Procédé selon l'une des revendications 1 à 4, caractérisé en ce que l'on opère avec un rapport molaire de la méthyldichlorophosphine à l'acide carboxylique $\alpha,\beta$-insaturé de 1 à 0,8-1,2, de préférence de 1 à 0,95-1,05.

6. Procédé selon l'une des revendications 1 à 5, caractérisé en ce que l'on chasse par distillation le trichlorure de phosphore du mélange de réaction après la réaction jusqu'à ce que l'on ait atteint dans le résidu une température de 120-140°C.

**Claims**

1. Process for making 2-chloroformylethylmethylphosphinic acid chlorides of the general formula:

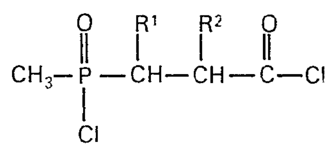

in which $R^1$ and $R^2$ stand for hydrogen or $CH_3$, by reacting methyldichlorophosphane with an unsaturated carboxylic acid of the formula $CHR^1 = CR^2COOH$ at elevated temperatures, characterized in that a solution of methyldichlorophosphane in phosphorus trichloride, such as that which is obtained in the reaction of phosphorus trichloride with methane at temperatures higher than 500°C is used, the reaction is effected at temperatures of 50 to 90°C in the presence of hydrogen chloride, and the phosphorus trichloride is distilled off.

2. Process as claimed in claim 1, characterized in that solutions of methyldichlorophosphane in phosphorus trichloride containing 5 to 95 weight %, preferably 10 to 25 weight %, of methyldichlorophosphane are used.

3. Process as claimed in claim 1 or 2, characterized in that 0.01 to 1 mol, preferably 0.05 to 0.5

mol, of hydrogen chloride per mol of methyldichlorophosphane per hour is passed through the reaction mixture.

4. Process as claimed in any of claims 1 to 3, characterized in that the reaction is effected at temperatures of 70 to 76°C.

5. Process as claimed in any of claims 1 to 4, characterized in that methyldichlorophosphane and α,β-unsaturated carboxylic acid are used in a molar ratio of 1:0.8 – 1.2, preferably 1:0.95–1.05.

6. Process as claimed in any of claims 1 to 5, characterized in that, after the reaction, the phosphorus trichloride is distilled off from the reaction mixture until establishment of a temperature of 120–140°C in the residue.